# FASCICULE DE BREVET EUROPEEN

(11) **EP 4 647 611 B1**
(45) Date de publication et mention de la délivrance du brevet: **12.08.2026**
(21) Numéro de dépôt: 25163292.3
(22) Date de dépôt: 12.03.2025
(51) Int. Cl.: F15B 20/00, F15B 15/14, F15B 15/26, F15B 19/00, G01M 15/14, F15B 15/28, F15B 21/08

(54) **DISPOSITIF D'ACTIONNEMENT LINEAIRE ET BANC D'ESSAI DE ROTOR D'AERONEF ASSOCIE**
LINEARBETÄTIGUNGSVORRICHTUNG UND ZUGEHÖRIGER ROTORPRÜFSTAND FÜR EIN LUFTFAHRZEUG
LINEAR ACTUATOR DEVICE AND ASSOCIATED AIRCRAFT ROTOR TEST BENCH

(30) Priorité: 07.05.2024 FR 2404795
(43) Date de publication de la demande: 12.11.2025
(73) Titulaire: Airbus Helicopters, 13725 Marignane Cedex (FR)
(72) Inventeur: VARGAS, Fabien, 13100 Aix en Provence (FR); JAUFFRET, Laurent, 13880 Vélaux (FR)
(74) Mandataire: GPI Brevets

(56) Documents cités:
- CN-A- 104 973 238
- CN-A- 111 188 850
- CN-B- 108 953 280
- US-A1- 2015 152 842
- US-B2- 10 683 880

## Description

La présente invention concerne le domaine technique des dispositifs d'actionnement linéaire. De tels dispositifs peuvent comporter par exemple des actionneurs ou vérins à commande hydraulique, pneumatique ou encore électrique et au moins deux éléments mobiles en translation l'un par rapport à l'autre tels un corps et une tige.

Par exemple, un banc d'essai de rotor peut comprendre plusieurs dispositifs d'actionnement linéaire pour mettre en mouvement un ensemble de plateaux cycliques du rotor testé.

Or, un dispositif d'actionnement linéaire peut être soumis lors de son utilisation à différents cas de pannes pouvant engendrer un dysfonctionnement, voire une panne empêchant de commander la translation d'un élément mobile.

En outre, pour certaines applications, telles que sur un banc d'essai de rotor d'aéronef où plusieurs dispositifs d'actionnement linéaire peuvent être utilisés, une telle panne d'un dispositif d'actionnement linéaire peut être problématique et engendrer de graves dommages au banc d'essais et/ou au système en essai.

Par ailleurs, il est à noter que les documents CN104973238, US10683880, US20150152842, CN108953280 et CN111188850 divulguent des dispositifs d'actionnement linéaire éloignés de l'invention.

La présente invention a alors pour objet de proposer un dispositif permettant d'améliorer le niveau de sûreté d'un dispositif d'actionnement linéaire.

L'invention concerne donc un dispositif d'actionnement linéaire comportant un actionneur principal muni d'un corps principal et d'une tige principale mobile selon au moins un degré de liberté en translation par rapport au corps principal.

Un tel dispositif d'actionnement linéaire comporte un système de secours configuré pour :
- dans un mode de fonctionnement nominal du dispositif d'actionnement linéaire, autoriser un déplacement de la tige principale de l'actionneur principal par rapport au corps principal, et
- dans un mode de fonctionnement de secours du dispositif d'actionnement linéaire, ramener puis maintenir la tige principale de l'actionneur principal dans une position refuge prédéterminée.

Autrement dit, un tel système de secours peut permettre de laisser la tige principale de l'actionneur principal libre de se déplacer tant que le dispositif d'actionnement linéaire est dans son mode de fonctionnement nominal.

En revanche, en cas de panne de l'actionneur principal ou d'un système de commande de cet actionneur principal, le système de secours est activé pour empêcher la tige principale de se déplacer librement par rapport au corps principal. En fonction de la position courante de la tige principale, lors de la mise en œuvre du mode de fonctionnement de secours, le système de secours peut alors déplacer la tige principale pour la placer et la maintenir dans la position refuge prédéterminée par rapport au corps principal. Le système de secours interdit alors tout déplacement de la tige principale par rapport au corps principal.

En outre, une telle tige principale peut être dite « traversante » ou « non traversante » à l'intérieur du corps principal. Dans le cas d'une tige traversante, une tête de piston solidaire de la tige principale et séparant deux chambres sous pression est agencée entre deux portions de tige. Alternativement, dans le cas d'une tige non traversante, une tête de piston solidaire de la tige principale est agencée au niveau d'une extrémité libre de la tige principale.

Par ailleurs, une telle tige principale peut former soit un ensemble monolithique, soit présenter au moins deux portions solidaires entre elles, soit présenter au moins deux portions mobiles l'une par rapport à l'autre. Dans ce dernier cas, la tige principale peut par exemple comporter un premier tronçon et un deuxième tronçon mobiles au moins en translation l'un par rapport à l'autre selon un axe de translation principal le long duquel la tige principale se déplace par rapport au corps principal.

Lorsque qu'un tel dispositif d'actionnement linéaire est utilisé sur un banc d'essai de rotor, il peut alors permettre, en cas de dysfonctionnement de l'actionneur principal ou de la commande de cet actionneur principal, de commander le pas des pales de ce rotor vers un pas prédéterminé correspondant à la position refuge prédéterminée de la tige principale de l'actionneur principal.

Par exemple, dans ce mode de fonctionnement de secours du dispositif d'actionnement linéaire, le pas prédéterminé des pales peut correspondre à un pas nul de manière à ne transmettre aucune poussée verticale sur un châssis du banc d'essai.

En outre, le passage du mode de fonctionnement nominal au mode de fonctionnement de secours du dispositif d'actionnement linéaire peut être opéré automatiquement par le dispositif d'actionnement linéaire à l'aide d'au moins un senseur configuré pour détecter une panne ou un dysfonctionnement de l'actionneur principal ou de son système de commande. Un contrôleur est alors en communication avec le ou les senseurs et applique des instructions pour déterminer la présence d'un dysfonctionnement et piloter en conséquence le système de secours.

Alternativement ou complémentairement, un tel passage du mode de fonctionnement nominal au mode de fonctionnement de secours du dispositif d'actionnement linéaire peut être opéré par un opérateur surveillant le fonctionnement du dispositif d'actionnement linéaire. Un tel opérateur actionne ainsi une interface homme-machine, tel un bouton, un interrupteur d'urgence ou une dalle tactile, permettant à la fois de désactiver le mode de fonctionnement nominal du dispositif d'actionnement linéaire et d'activer le mode de fonctionnement de secours du dispositif d'actionnement linéaire.

En outre, l'actionneur principal peut être commandé au moyen d'une commande hydraulique, pneumatique ou encore électrique. Par exemple, l'actionneur principal peut comporter un vérin hydraulique relié à un système d'alimentation en fluide hydraulique, le système d'alimentation comportant au moins une pompe hydraulique reliée hydrauliquement à l'actionneur principal par des durites.

L'utilisation d'un vérin hydraulique et d'un fluide hydraulique permet notamment de transmettre rapidement l'énergie et la pression fournie par une pompe pour déplacer la tige principale. De plus, parce que c'est un fluide visqueux, le fluide hydraulique peut également assurer la lubrification des différents composants tels que la pompe hydraulique, des distributeurs et du vérin. En outre, un ou plusieurs accumulateurs de pression peuvent permettre de stocker le fluide hydraulique sous pression avant d'être distribué vers l'actionneur principal.

De plus, le système de secours comporte un actionneur secondaire muni d'un corps secondaire et d'une tige secondaire mobile selon un degré de liberté en translation par rapport au corps secondaire, la tige secondaire étant solidarisée avec la tige principale uniquement dans le mode de fonctionnement de secours du dispositif d'actionnement linéaire.

Ainsi, un tel actionneur secondaire peut, par exemple, être agencé mécaniquement en parallèle de l'actionneur principal. La tige principale présente un degré de liberté en translation selon un axe de translation principal et la tige secondaire présente un degré de liberté en translation selon un axe de translation secondaire parallèle à l'axe de translation principal.

Dans le mode de fonctionnement nominal du dispositif d'actionnement linéaire, la tige secondaire reste immobile dans une position de repos, par exemple médiane, prédéterminée par rapport au corps secondaire.

En revanche dans le mode de fonctionnement de secours du dispositif d'actionnement linéaire, la tige secondaire peut être déplacée depuis la position de repos prédéterminée, conjointement avec la tige principale, pour placer et maintenir la tige principale dans sa position refuge prédéterminée.

Selon un autre aspect, un tel actionneur secondaire peut être commandé au moyen d'une commande hydraulique, pneumatique ou encore électrique. Par exemple, l'actionneur secondaire peut comporter un moteur électrique permettant d'entraîner en rotation une vis sans fin coopérant avec un écrou ou un mécanisme à billes apte à convertir le mouvement de rotation de la vis en un mouvement de translation de la tige secondaire.

Selon l'invention, le système de secours est remarquable en ce qu'il comporte un bloqueur hydraulique solidarisé avec la tige secondaire, le bloqueur hydraulique comportant une bague de serrage déformable configurée pour :
- dans le mode de fonctionnement nominal, permettre un coulissement sans frottement de la tige principale par rapport à la bague de serrage, et
- dans le mode de fonctionnement de secours, exercer un effort presseur sur la tige principale et rendre solidaire en translation la tige principale et la tige secondaire.

Autrement dit, un tel bloqueur peut être relié à un actionneur hydraulique permettant de commander un état de la bague de serrage déformable. Une telle bague de serrage peut notamment présenter une surface cylindrique de révolution interne coopérant avec une surface cylindrique de révolution externe de la tige principale.

Dans un état nominal de la bague de serrage déformable mis en œuvre durant le mode de fonctionnement nominal, la surface cylindrique de révolution interne présente un jeu fonctionnel avec la surface cylindrique de révolution externe. Un tel jeu fonctionnel est alors apte à permettre un guidage en translation relatif entre la tige principale et le bloqueur, et donc avec la tige secondaire.

Dans un état serré de la bague de serrage déformable mis en œuvre durant le mode de fonctionnement de secours, la surface cylindrique de révolution interne présente un ajustement serré avec la surface cylindrique de révolution externe.

En outre, la capacité de déformation importante de la bague de serrage peut être obtenue au moyen d'une pluralité d'échancrures agencées par exemple axialement dans l'épaisseur de la bague de serrage. Deux échancrures successives peuvent par ailleurs déboucher sur deux faces planes opposées délimitant un volume externe de la bague de serrage. Chaque échancrure peut alors comporter une extrémité débouchante coopérant avec une face plane externe de la bague de serrage et une extrémité non débouchante coopérant avec une face cylindrique interne d'un alésage radial de la bague de serrage.

Par ailleurs, le coefficient de frottement entre la bague de serrage et de la tige principale peut être amélioré par le dépôt d'un matériau. Une couche fine de matériau destinée à augmenter le coefficient de frottement peut ainsi être rapportée au moins localement au niveau de la surface cylindrique de révolution interne.

Avantageusement, le système de secours peut comporter des moyens de réglage configurés pour régler axialement une position relative entre le corps secondaire et le corps principal ainsi que des moyens de solidarisation réversible configurés pour solidariser le corps secondaire avec le corps principal.

De tels moyens de réglage permettent en effet d'adapter le système de secours en fonction d'une utilisation particulière du dispositif d'actionnement linéaire et notamment d'agencer la tige secondaire dans sa position de repos prédéterminée en fonction d'une course totale particulière de la tige principale par rapport au corps principal.

Ainsi, il est possible d'utiliser un même dispositif d'actionnement linéaire qui soit compatible avec différents modèles de rotors et donc de limiter les coûts de conception et de fabrication des dispositifs d'actionnement linéaire équipant un banc d'essai.

En pratique, le bloqueur hydraulique peut comporter :
- un carter,
- une pluralité de pistons agencés dans le carter radialement par rapport à un axe de translation principal de déplacement de la tige principale, les pistons coulissant respectivement dans des chambres reliées hydrauliquement en parallèle à une alimentation hydraulique comportant une pompe configurée pour comprimer un fluide dans les chambres, le fluide permettant d'exercer un effort de poussée sur chaque piston pour placer chaque piston dans une première position extrémale correspondant au mode de fonctionnement nominal, et
- des moyens de rappel élastique exerçant chacun un effort de rappel sur un piston pour déplacer chaque piston de la première position extrémale vers une seconde position extrémale correspondant au mode de fonctionnement de secours.

En d'autres termes, l'alimentation hydraulique permet de positionner et de maintenir les pistons dans leur première position extrémale à l'intérieur du carter pour permettre à la bague de serrage déformable d'être agencée dans son état nominal.

Outre une pompe, une telle alimentation hydraulique peut comporter d'autres éléments hydrauliques tels que des durites et un ou plusieurs accumulateurs de pression.

Avantageusement, le système de secours peut comporter un système de suivi configuré pour générer une information de suivi en fonction d'une position courante de la tige principale par rapport au corps principal relativement par rapport à la position refuge.

Ainsi, un tel système de suivi permet à tout instant de suivre la position courante de la tige principale et de savoir, lorsque le mode de fonctionnement de secours est mis en œuvre, dans quelle direction la tige principale doit être déplacée pour se rapprocher de sa position refuge et s'y positionner.

Selon un exemple de réalisation de l'invention, le système de suivi peut comporter un fourreau mobile selon un degré de liberté en translation par rapport à un support suivant un axe de translation de suivi, le fourreau étant solidaire de la tige principale et configuré pour se déplacer en translation conjointement avec la tige principale, l'axe de translation de suivi étant parallèle à l'axe de translation principal.

Autrement dit, un bras de liaison permet de solidariser entre eux la tige principale et le fourreau par exemple au niveau de leur extrémité libre respective. Un tel bras de liaison peut s'étendre perpendiculairement par rapport à l'axe de translation principal.

En pratique, le fourreau peut comporter une surface cylindrique externe munie de trois pistes orientées parallèlement selon l'axe de translation de suivi, les trois pistes étant respectivement décalées en azimut les unes par rapport aux autres autour de l'axe de translation de suivi.

Chaque piste peut ainsi s'étendre longitudinalement selon l'axe de translation de suivi. Les pistes peuvent par exemple être agencées les unes à côté des autres sur la surface cylindrique externe du fourreau ou être décalés angulairement à 120° les unes par rapport aux autres.

Avantageusement, le système de suivi peut comporter trois senseurs solidaires du support, chaque piste étant agencée en regard d'un senseur et présentant au moins deux portions colorées présentant au moins deux couleurs différentes destinées à être identifiées par le senseur.

Chaque senseur peut être de type logique ou tout ou rien, c'est-à-dire fournissant un changement d'état de manière digitale avec une valeur 0 ou 1. Par exemple, chaque senseur peut détecter une portion colorée d'une piste et les senseurs permettent conjointement de déterminer la position relative courante du fourreau par rapport à la position refuge en utilisant une table de vérité en algèbre booléen. Par exemple, la position refuge peut être définie par l'identification simultanée sur les trois pistes d'une combinaison de trois portions colorées présentant une première couleur identique.

Une première piste peut ainsi présenter deux portions colorées de couleurs différentes agencées l'une après l'autre suivant une direction parallèle à l'axe de translation de suivi. Par exemple, une première portion colorée, agencée dans une partie haute du fourreau, présente la première couleur et une seconde portion colorée, agencée dans une partie basse du fourreau, présente une seconde couleur.

Cette première piste peut permettre d'indiquer un premier sens de déplacement de la tige principale relativement par rapport à sa position refuge. Selon l'exemple précédemment décrit, ce premier sens de déplacement peut ainsi correspondre à un axe orienté de la partie basse du fourreau vers la partie haute du fourreau.

Une deuxième piste peut quant à elle présenter deux portions colorées de couleurs différentes agencées l'une après l'autre suivant une direction parallèle à l'axe de translation de suivi, l'agencement des deux portions colorées de la deuxième piste étant inversé par rapport à celui de la première piste. Par exemple, une première portion colorée agencée dans la partie basse du fourreau présente la première couleur et une seconde portion colorée, agencée dans la partie haute du fourreau, présente la seconde couleur. La position refuge peut alors être identifiée au niveau d'un recouvrement en azimut très localisé des premières portions colorées de la première et de la deuxième piste.

Cette deuxième piste peut indiquer un second sens de déplacement, opposé au premier sens de déplacement, de la tige principale relativement par rapport à sa position refuge. Ce second sens de déplacement peut ainsi peut ainsi correspondre à un axe orienté de la haute basse du fourreau vers la partie basse du fourreau.

En outre, la tige principale peut être agencée dans sa position refuge lorsque à la fois un premier senseur détecte la première couleur sur la première piste et un second senseur détecte la première couleur sur la seconde piste.

Enfin, une troisième piste peut présenter trois portions colorées avec deux couleurs différentes agencées l'une après l'autre suivant une direction parallèle à l'axe de translation de suivi.

Par exemple, une première portion colorée agencée dans une partie centrale du fourreau présente la première couleur, une deuxième portion colorée, agencée dans la partie haute du fourreau, présente la seconde couleur et une troisième portion colorée, agencée dans la partie basse du fourreau, présente la seconde couleur. Les deuxième et troisième portions colorées lorsqu'elles sont détectées par un troisième senseur, permettent alors d'identifier qu'une butée de fin de course de la tige principale est atteinte.

En conjonction avec une détection des deuxièmes portions colorées de la première et de la deuxième piste, la table de vérité permet d'identifier s'il s'agit d'une butée haute ou une buté basse de fin de course. En effet, lorsque la deuxième portion colorée de la première piste est simultanément détectée avec la deuxième portion colorée de la troisième piste, une butée haute peut être identifiée et lorsque la deuxième portion colorée de la deuxième piste est simultanément détectée avec la troisième portion colorée de la troisième piste, une butée basse peut être identifiée.

Selon un autre exemple de réalisation de l'invention, le système de suivi peut comporter un contrôleur relié aux trois senseurs pour générer l'information de suivi en fonction de la position courante de la tige principale relativement par rapport à la position refuge et commander l'actionneur secondaire pour déplacer la tige principale dans la position refuge.

Ainsi, un tel contrôleur du système de suivi est connecté par voie filaire ou non filaire aux trois senseurs et permet de connaitre constamment la position relative de la tige principale au regard de sa position refuge. Le contrôleur peut également identifier à partir de la table de vérité en algèbre booléen si la tige principale a atteint l'une de ses butées de fin de course.

Lorsque le mode de fonctionnement nominal est mis en œuvre, le contrôleur peut envoyer un ordre de commande à l'actionneur principal pour stopper un déplacement de la tige principale lorsqu'elle a atteint l'une des butées de fin de course.

De plus, lorsque le mode de fonctionnement de secours est mis en œuvre, le contrôleur peut envoyer un ordre de commande à l'actionneur secondaire pour rappeler la tige principale en position refuge.

En pratique, le dispositif d'actionnement linéaire peut comporter au moins un contrepoids d'équilibrage décalé radialement par rapport à un axe de translation principal de déplacement de la tige principale. Le ou les contrepoids d'équilibrage sont en outre configurés pour contrer un balourd engendré par le système de secours. Ainsi, en fonction de la masse et de la position du système de secours par rapport à l'axe de translation principal, le nombre et les masses des contrepoids d'équilibrage peuvent être modifiés. Le ou les contrepoids d'équilibrage permettent alors de ramener le centre de gravité d'un dispositif d'actionnement linéaire sur l'axe de translation principal.

La présente invention a aussi pour objet un banc d'essai de rotor d'aéronef, le rotor étant muni d'un moyeu et de pales, le banc d'essai comportant un moteur permettant d'entraîner en rotation le rotor.

Selon l'invention, un tel banc d'essai est remarquable en ce qu'il comporte au moins un dispositif d'actionnement linéaire tel que décrit précédemment, et en ce que, lors d'un mouvement de rotation du rotor, ledit au moins un dispositif d'actionnement linéaire est configuré pour, dans le mode de fonctionnement nominal, faire varier un pas des pales du rotor par rapport au moyeu et, dans le mode de fonctionnement de secours, pour maintenir le pas des pales du rotor vers une valeur prédéterminée.

En pratique, le banc d'essai peut comporter au moins trois dispositifs d'actionnement linéaire conformes à l'invention agencés en lieu et place des servocommandes faisant varier le pas des pales du rotor lorsque celui-ci est agencé sur un aéronef. Les trois dispositifs d'actionnement linéaire peuvent alors être agencés par exemple de manière équirépartie autour de l'axe de rotation du rotor.

Une première extrémité de chaque dispositif d'actionnement linéaire est agencée en liaison rotule ou pivot avec un châssis du banc d'essai et peut ainsi présenter au moins un degré de liberté en rotation par rapport à ce châssis.

De même, une seconde extrémité de chaque dispositif d'actionnement linéaire est agencée en liaison rotule ou pivot avec un système de plateaux de commande du pas des pales du rotor et peut ainsi présenter au moins un degré de liberté en rotation par rapport à ce système de plateaux de commande du pas des pales du rotor.

Un tel banc d'essai est ainsi sûr et peut limiter le niveau de risque d'accident en cas de dysfonctionnement d'un actionneur principal lors de l'utilisation du banc d'essai et lors de la rotation d'un rotor à des vitesses de rotation importantes.

L'invention et ses avantages apparaîtront avec plus de détails dans le cadre de la description qui suit avec des exemples donnés à titre illustratif en référence aux figures annexées qui représentent :
la figure 1, une vue en perspective d'un banc d'essai conforme à l'invention,
la figure 2, une vue en perspective d'un dispositif d'actionnement linéaire conforme à l'invention,
la figure 3, une vue en perspective d'un actionneur secondaire du dispositif d'actionnement linéaire, conformément à l'invention,
la figure 4, une vue en perspective d'un bloqueur hydraulique du dispositif d'actionnement linéaire, conformément à l'invention,
la figure 5, une vue en coupe en perspective du bloqueur hydraulique du dispositif d'actionnement linéaire, conformément à l'invention,
la figure 6, une vue en coupe du bloqueur hydraulique du dispositif d'actionnement linéaire, conformément à l'invention,
la figure 7, une vue en perspective partielle du bloqueur hydraulique du dispositif d'actionnement linéaire, conformément à l'invention,
la figure 8, une vue en coupe en perspective d'un piston du bloqueur hydraulique du dispositif d'actionnement linéaire, conformément à l'invention,
la figure 9, une vue en perspective d'un système de suivi du dispositif d'actionnement linéaire, conformément à l'invention,
la figure 10, une vue en perspective d'un fourreau du système de suivi du dispositif d'actionnement linéaire, conformément à l'invention,
la figure 11, une vue en perspective du système de suivi du dispositif d'actionnement linéaire, conformément à l'invention,

Les éléments présents dans plusieurs figures distinctes sont affectés d'une seule et même référence.

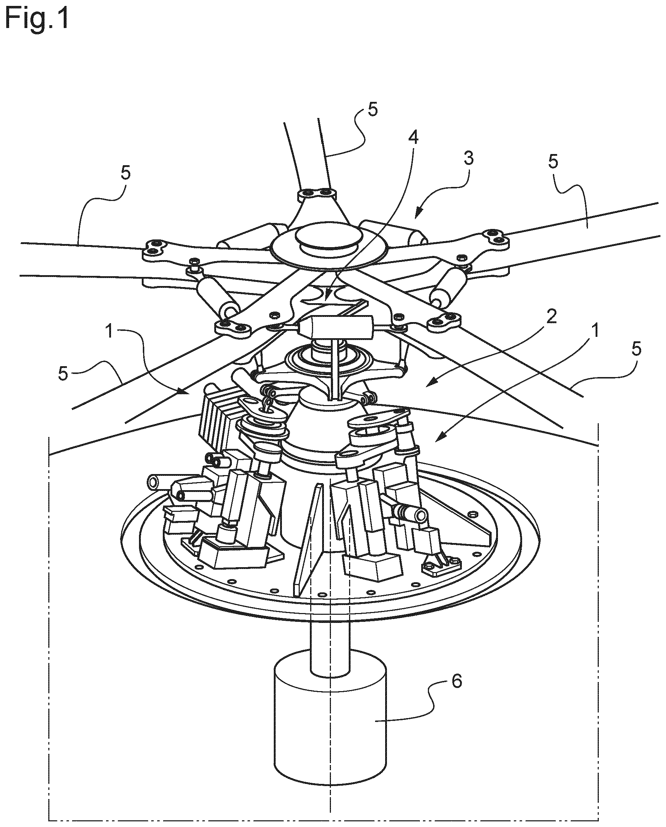

Telle que représentée à la figure 1, l'invention se rapporte par exemple au domaine des bancs d'essai 2 permettant de tester des rotors 3 d'un aéronef, tels des rotors de giravion. Un tel rotor 3 à tester est ainsi équipé d'un moyeu 4 et de pales 5 à pas variable portées par le moyeu 4. Un système de plateaux usuel peut en outre permettre de faire varier cycliquement et collectivement le pas des pales du rotor, en étant relié aux pales par des bielles.

En outre, un tel banc d'essai 2 comporte un moteur 6 permettant d'entraîner en rotation le rotor 3 pour simuler un fonctionnement normal sur un aéronef.

De plus, pour modifier le pas des pales 5 du rotor 3, le banc d'essai 2 comporte au moins un dispositif d'actionnement linéaire 1 en liaison d'une part avec le système de plateaux et d'autre part avec un châssis du banc d'essai. Lors d'un mouvement de rotation du rotor 3, le ou les dispositifs d'actionnement linéaire 1 permettent, dans un mode de fonctionnement nominal, de faire varier le pas des pales 5 du rotor 3 par rapport au moyeu 4 et, dans un mode de fonctionnement de secours, de maintenir le pas des pales 5 du rotor 3 vers une valeur prédéterminée.

Un tel banc d'essai 2 peut ainsi comporter des dispositifs d'actionnement linéaire 1 remplaçant des servocommandes respectives équipant un aéronef lorsque le rotor 3 est utilisé en conditions normales sur l'aéronef.

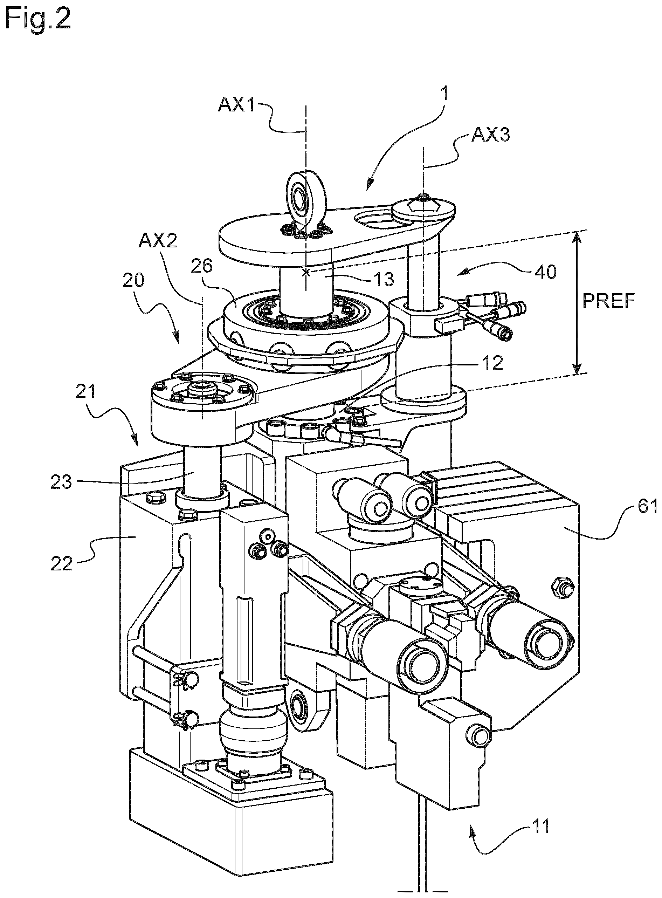

Un tel dispositif d'actionnement linéaire 1 est représenté plus en détail à la figure 2 et permet de simuler au sol le fonctionnement et les sollicitations d'un rotor 3.

Ce dispositif d'actionnement linéaire 1 comporte notamment un actionneur principal 11 muni d'un corps principal 12 et d'une tige principale 13 mobile selon un degré de liberté en translation par rapport au corps principal 12. Ainsi, la tige principale 13 peut être déplacée rapport au corps principal 12 suivant un axe de translation principal Ax1. Par exemple, si l'actionneur principal 11 est un vérin hydraulique, la tige principale 13 est solidaire d'un piston agencé dans le corps principal 12. Le piston est alors déplacé avec la tige principale 13 au moyen d'un fluide sous pression transmis dans une chambre par une alimentation hydraulique principale non représentée. Alternativement, un tel actionneur principal 11 peut être un vérin électrique ou pneumatique.

Selon une caractéristique remarquable de l'invention, ce dispositif d'actionnement linéaire 1 comporte un système de secours 20 permettant dans un mode de fonctionnement nominal du dispositif d'actionnement linéaire 1, d'autoriser un déplacement de la tige principale 13 par rapport au corps principal 12.

En revanche, dans un mode de fonctionnement de secours du dispositif d'actionnement linéaire 1, le système de secours 20 permet d'immobiliser la tige principale 13 de l'actionneur principal 11 dans une position de refuge PREF prédéterminée.

Ce système de secours 20 peut comporter un actionneur secondaire 21 muni d'un corps secondaire 22 qui peut être par exemple solidaire du corps principal 12 et d'une tige secondaire 23 mobile selon un degré de liberté en translation par rapport au corps secondaire 22.

Ainsi, la tige secondaire 23 peut être déplacée par rapport au corps secondaire 22 suivant un axe de translation secondaire Ax2 par exemple au moyen d'un moteur électrique si l'actionneur secondaire 21 est un vérin électrique. Alternativement, l'actionneur secondaire 21 peut être un vérin hydraulique ou pneumatique.

En outre, la tige secondaire 23 est solidarisée à la tige principale 13 uniquement dans le mode de fonctionnement de secours du dispositif d'actionnement linéaire 1.

Pour ce faire, le système de secours 20 peut comporter un bloqueur hydraulique 26 solidarisé à la tige secondaire 23.

Par ailleurs, le système de secours 20 peut également comporter un système de suivi 40 configuré pour générer une information de suivi en fonction d'une position courante de la tige principale 13 par rapport au corps principal 12 relativement par rapport à la position refuge PREF.

Enfin, un tel dispositif d'actionnement linéaire 1 peut comporter au moins un contrepoids d'équilibrage 61 décalé radialement par rapport à l'axe de translation principal Ax1.

Un tel contrepoids d'équilibrage 61 permet ainsi de contrer le balourd généré par l'utilisation de l'actionneur secondaire 21 qui est également décalé radialement par rapport à l'axe de translation principal Ax1.

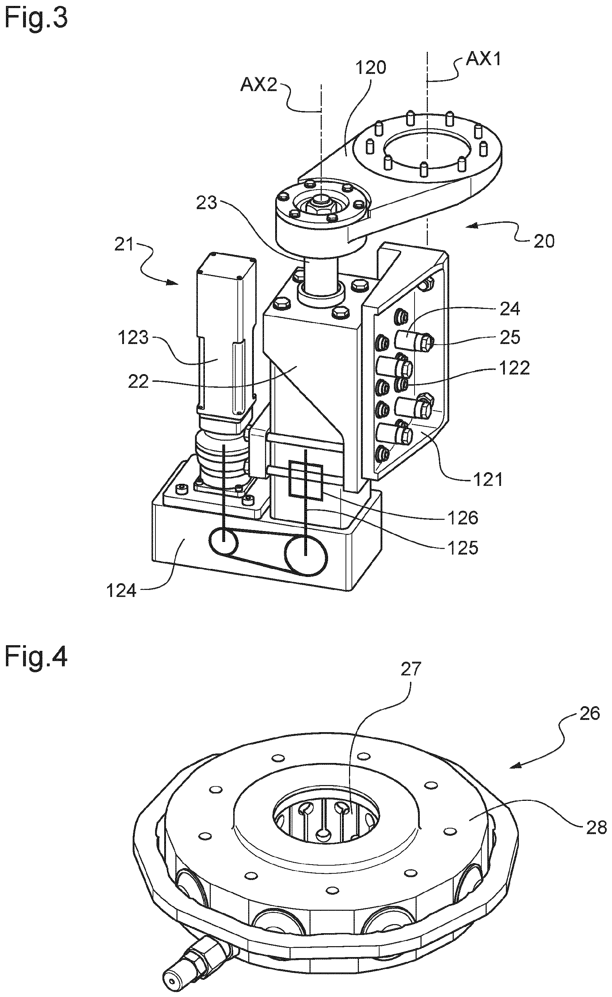

Tel que représenté à la figure 3, le système de secours 20 peut comporter des moyens de réglage 24 configurés pour régler axialement une position relative entre le corps secondaire 22 et le corps principal 12 ainsi que des moyens de solidarisation réversible 25 configurés pour solidariser le corps secondaire 22 avec le corps principal 12.

Les moyens de réglage 24 peuvent comporter des trous 122 de forme oblongue et/ou une pluralité de trous 122 espacés d'un même entraxe et permettant de régler différentes positions de fixation entre le corps secondaire 22 et le corps principal 12. En outre, tels que représentés, les trous 122 peuvent être agencés sur une équerre 121 solidarisée avec le corps principal 12.

Les moyens de solidarisation réversible 25 peuvent quant à eux être formés par des vis ou goujons et des écrous complémentaires.

En outre, le système de secours 20 peut comporter un premier bras de liaison 120 solidarisé d'une part à la tige secondaire 12 et d'autre part au bloqueur hydraulique 26 par des moyens usuels de vissage, soudage ou autres. Un tel premier bras de liaison 120 permet alors de solidariser la tige principale 13 et la tige secondaire 23 au moyen du bloqueur hydraulique 26 dans le mode de fonctionnement de secours du dispositif d'actionnement linéaire 1. Un tel premier bras de liaison 120 peut, par exemple, s'étendre sensiblement perpendiculairement par rapport à l'axe de translation principal Ax1 et à l'axe de translation secondaire Ax2.

Un tel actionneur secondaire 21 peut comporter un moteur électrique 123 et un système de renvoi d'angle 124 à courroie permettant d'entraîner en rotation une vis sans fin 125 et de générer le déplacement en translation de la tige secondaire 23 au moyen d'un écrou solidaire de la tige secondaire 23 ou d'un mécanisme à billes 126 apte à convertir le mouvement de rotation de la vis sans fin 125 en un mouvement de translation de la tige secondaire 23.

Tel que représenté plus en détails aux figures 4 à 8, le bloqueur hydraulique 26 comporte une bague de serrage 27 déformable configurée dans le mode de fonctionnement nominal, pour autoriser en son sein le coulissement sans frottement de la tige principale 13. Dans le mode de fonctionnement de secours, la bague de serrage 27 déformable est configurée pour exercer un effort presseur sur la tige principale 13 afin de rendre solidaire en translation la tige principale 13 et la tige secondaire 23.

En outre selon la figure 4, le bloqueur hydraulique 26 comporte également un carter 28 à l'intérieur duquel la bague de serrage 27 est agencée. En outre, un tel carter 28 présente un volume interne permettant à la fois de contenir la bague de serrage 27 et de fournir à la bague de serrage 27 une capacité de déformation radialement autour de la tige principale 13.

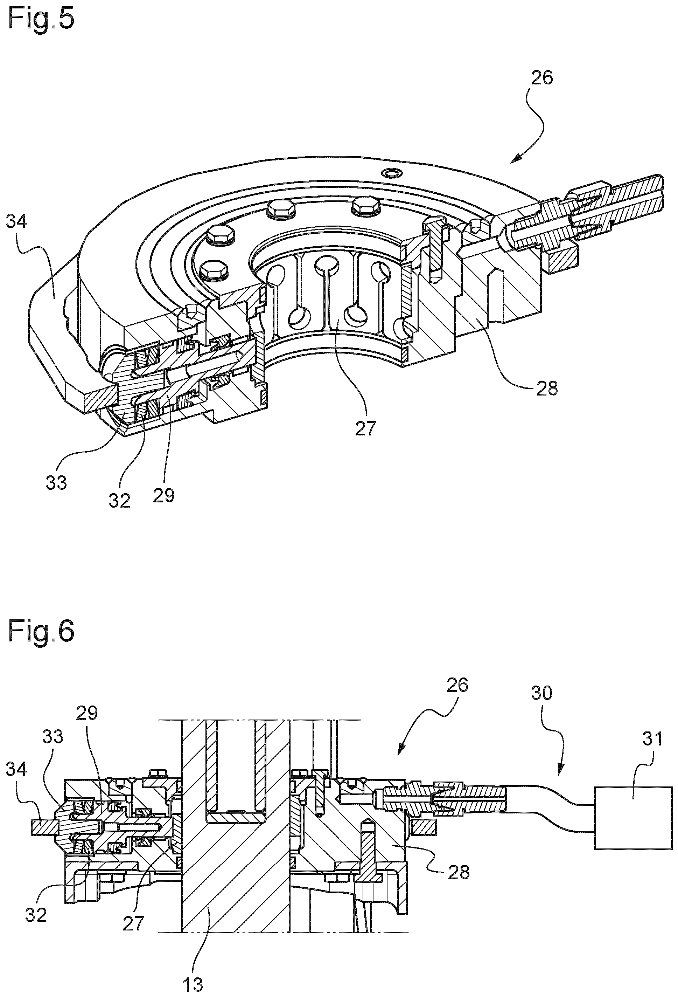

Tel que représenté aux figures 5 à 8, le bloqueur hydraulique 26 comporte aussi une pluralité de pistons 29 agencés dans le carter 28 et mobiles radialement par rapport à l'axe de translation principal Ax1.

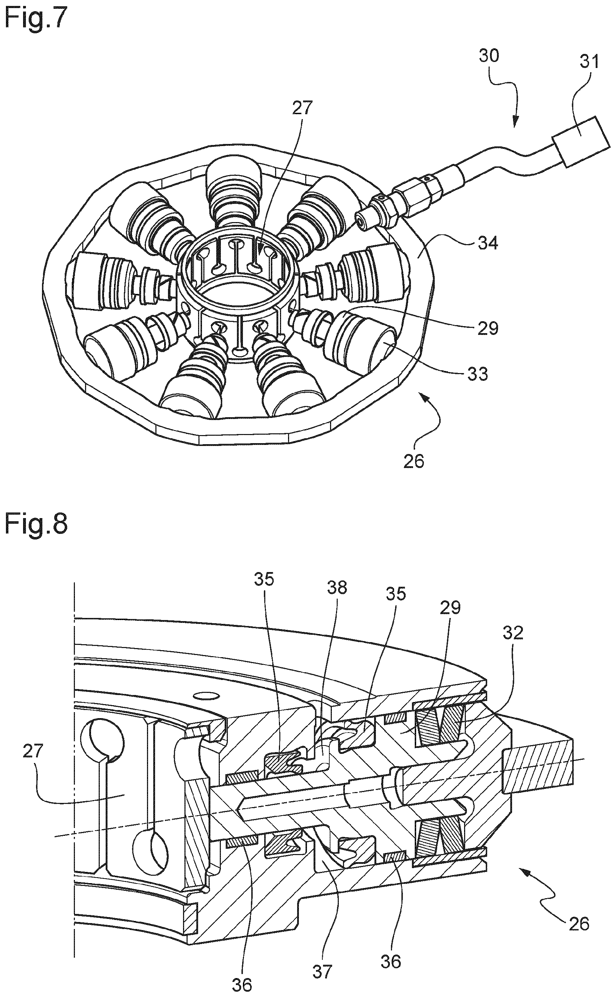

Tels que représentés aux figures 6 et 7, de tels pistons 29 peuvent coulisser respectivement dans des chambres 37 reliées hydrauliquement en parallèle à une alimentation hydraulique 30 comportant une pompe 31. Une telle pompe 31 est alors configurée pour comprimer un fluide dans les chambres 37 dans le mode de fonctionnement nominal du dispositif d'actionnement linéaire 1.

Un tel fluide sous pression permet alors d'exercer un effort de poussée sur chaque piston 29 pour placer chaque piston 29 dans une première position extrémale lors du mode de fonctionnement nominal.

Par ailleurs, le bloqueur hydraulique 26 comporte également des moyens de rappel élastique 32, tels des rondelles coniques déformables, exerçant conjointement un effort de rappel sur un piston 29 pour déplacer chaque piston 29 de la première position extrémale vers une seconde position extrémale lorsque le fluide n'est plus sous pression dans chaque chambre 37 lors du mode de fonctionnement de secours. Dès lors, les pistons 29 exercent des efforts sur la bague de serrage 27. Les pistons 29 déforment la bague de serrage 27 qui serrent alors la tige principale.

Avantageusement, un tel bloqueur hydraulique 26 peut comporter une pluralité de butées 33 et un anneau élastique 34 permettant d'augmenter l'effort de rappel généré par les moyens de rappel élastique 32 sur chaque piston 29.

Chaque butée 33 coopère selon une liaison pivot glissant avec un piston 29 de manière à centrer la butée 33 par rapport au piston 29 et permettre de conférer au moins un degré de liberté en translation à une butée 33 par rapport à un piston 29. Chaque butée 33 coopère suivant une liaison de type appui-plan avec un moyen de rappel élastique 32 pour servir de butée axiale et s'opposer à l'effort de poussée exercé par le piston 29 sollicité dans la première position extrémale par le fluide sous pression.

Tel que représenté à la figure 7, le bloqueur hydraulique 26 peut comporter neuf pistons 29 et neuf butées 33 agencés radialement entre la bague de serrage 27 et l'anneau élastique 34.

Tel que représenté à la figure 8, le bloqueur hydraulique 26 peut comporter des joints d'étanchéité 35 permettant de contenir de manière étanche le fluide hydraulique fourni par le système d'alimentation hydraulique 30 dans chacune des chambres 37 délimitées par le carter 28 et le piston 29. Le fluide hydraulique peut alors exercer un effort de poussée sur une face plane 38 du piston 29.

En outre, le bloqueur hydraulique 26 peut également comporter des bagues de guidage 36 permettant de guider en translation chaque piston 29 dans le carter 28.

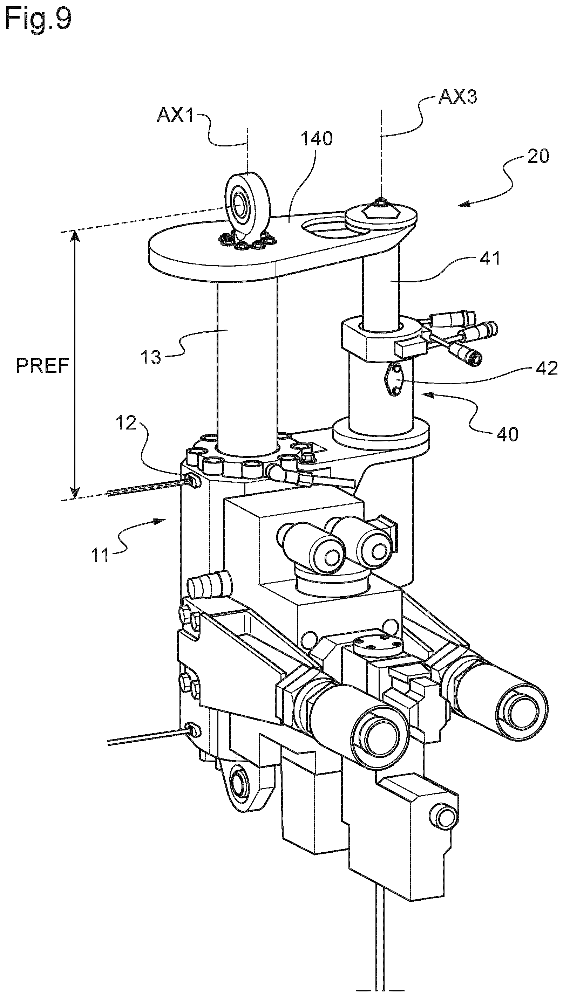

Tel que représenté à la figure 9, le système de suivi 40 peut comporter un fourreau 41 mobile selon un degré de liberté en translation par rapport à un support 42 suivant un axe de translation de suivi Ax3. Un tel fourreau 41 est solidaire de la tige principale 13 au moyen d'un second bras de liaison 140 fixé en liaison encastrement à des extrémités libres respectives de la tige principale 13 et du fourreau 41. Un tel second bras de liaison 140 peut s'étendre perpendiculairement par rapport à l'axe de translation principal AX1 et à l'axe de translation de suivi Ax3.

Un tel fourreau 41 peut ainsi se déplacer en translation conjointement avec la tige principale 13, l'axe de translation de suivi Ax3 étant parallèle à l'axe de translation principal Ax1.

Par ailleurs, le support 42 peut être solidarisé au corps principal 12 de l'actionneur principal 11.

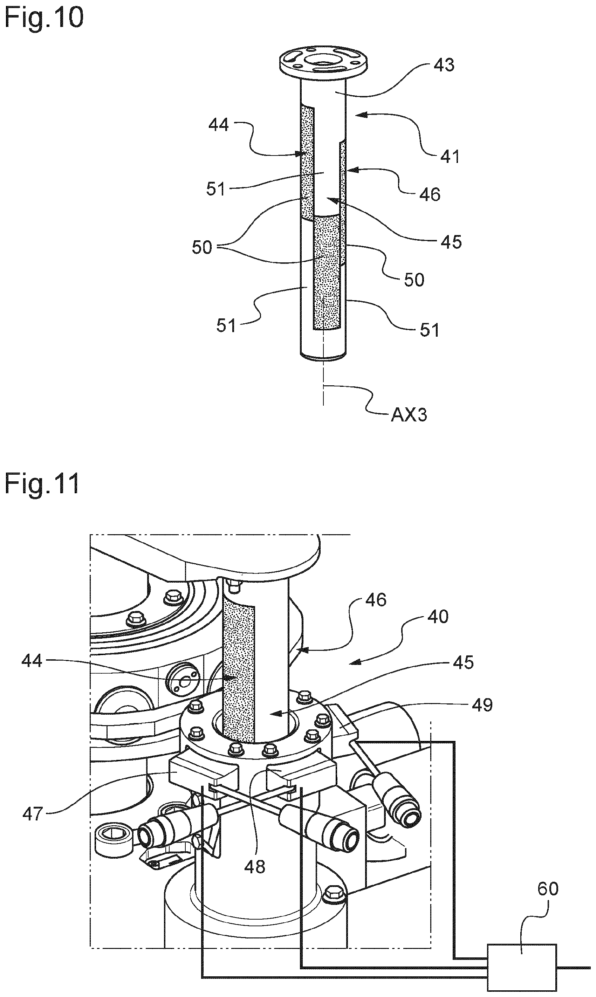

Tel que représenté à la figure 10, le fourreau 41 peut comporter une surface cylindrique externe 43 munie de trois pistes 44, 45, 46 orientées parallèlement selon l'axe de translation de suivi Ax3. Ces trois pistes 44, 45, 46 peuvent être agencées les unes contre les autres ou être respectivement décalées en azimut les unes par rapport aux autres autour de l'axe de translation de suivi Ax3.

Chacune des trois pistes 44, 45, 46 peut présenter au moins deux portions colorées 50, 51 destinées à coopérer avec trois senseurs 47, 48, 49 du système de suivi 40.

Tels que représentés à la figure 11, les trois senseurs 47, 48, 49 sont solidarisés au support 42 et permettent d'identifier quelle est la portion colorée 50, 51 agencée en regard des senseurs 47,48,49 pour connaître la position relative de la tige principale 13 par rapport à sa position refuge PREF. En pratique, chaque senseur 47, 48, 49 peut fournir un signal numérique binaire tel que 0 lorsqu'une première portion colorée 50 est agencée en regard et alternativement 1 lorsqu'une seconde portion colorée 51 est agencée en regard.

Ainsi, chaque piste 44, 45, 46 est agencée en regard d'un senseur 47, 48, 49 et comporte au moins deux portions colorées 50, 51 présentant au moins deux couleurs différentes destinées à être identifiées par le senseur 47, 48, 49.

Chaque senseur 47, 48, 49 permet ainsi de détecter une portion colorée 50, 51, et les senseurs permettent conjointement de déterminer la position relative courante du fourreau 41 par rapport à la position refuge PREF en utilisant une table de vérité en algèbre booléen. Par exemple, la position refuge peut être définie par l'identification simultanée sur les trois pistes 44, 45, 46 d'une combinaison de trois portions colorées 50 présentant une première couleur identique. Selon la table de vérité, chaque portion colorée 50 est alors affectée à la valeur 0 et chaque portion colorée 51 est affectée à la valeur 1.

Une première piste 44 peut ainsi présenter deux portions colorées 50, 51 de couleurs différentes agencées l'une après l'autre suivant une direction parallèle à l'axe de translation de suivi Ax3. Par exemple, une première portion colorée 50, agencée dans une partie haute du fourreau 41, présente la première couleur et une seconde portion colorée 51, agencée dans une partie basse du fourreau 41, présente une seconde couleur.

Cette première piste 44 peut permettre d'indiquer un premier sens de déplacement de la tige principale 13 relativement par rapport à sa position refuge PREF. Selon l'exemple précédemment décrit, ce premier sens de déplacement peut ainsi correspondre à un axe orienté de la partie basse du fourreau 41 vers la partie haute du fourreau 41.

Une deuxième piste 45 peut quant à elle présenter deux portions colorées 50, 51 de couleurs différentes agencées l'une après l'autre suivant une direction parallèle à l'axe de translation de suivi Ax3, l'agencement des deux portions colorées 50, 51 de la deuxième piste 45 étant inversé par rapport à celui de la première piste 44. Par exemple, une première portion colorée 50 agencée dans la partie basse du fourreau 41 présente la première couleur et une seconde portion colorée 51, agencée dans la partie haute du fourreau 41, présente la seconde couleur. La position refuge PREF peut alors être identifiée au niveau d'un recouvrement en azimut très localisé des premières portions colorées 50 de la première et de la deuxième piste 44, 45.

Cette deuxième piste 45 peut indiquer un second sens de déplacement, opposé au premier sens de déplacement, de la tige principale 13 relativement par rapport à sa position refuge PREF. Ce second sens de déplacement peut ainsi peut ainsi correspondre à un axe orienté de la haute basse du fourreau 41 vers la partie basse du fourreau 41.

Enfin, une troisième piste 46 peut présenter trois portions colorées 50, 51 avec deux couleurs différentes agencées l'une après l'autre suivant une direction parallèle à l'axe de translation de suivi Ax3.

Par exemple, une première portion colorée 50 agencée dans une partie centrale du fourreau 41 présente la première couleur, une deuxième portion colorée 51, agencée dans la partie haute du fourreau 41, présente la seconde couleur et une troisième portion colorée 51, agencée dans la partie basse du fourreau 41, présente également la seconde couleur.

En outre, la tige principale 13 peut être agencée dans sa position refuge PREF lorsque à la fois un premier senseur 47 détecte la première couleur sur la première piste 44, un deuxième senseur 48 détecte la première couleur sur la deuxième piste 45 et un troisième senseur 49 détecte la première couleur sur la troisième piste 46.

Les deuxième et troisième portions colorées 51 lorsqu'elles sont détectées par le troisième senseur 49, permettent alors d'identifier qu'une butée de fin de course de la tige principale 13 est atteinte.

En conjonction avec une détection des deuxièmes portions colorées 51 de la première et de la deuxième piste 44, 45, la table de vérité permet d'identifier s'il s'agit d'une butée haute ou une buté basse de fin de course. En effet, lorsque la deuxième portion colorée 51 de la première piste 44 est simultanément détectée avec la deuxième portion colorée 51 de la troisième piste 46, une butée haute peut être identifiée et lorsque la deuxième portion colorée 51 de la deuxième piste 45 est simultanément détectée avec la troisième portion colorée 51 de la troisième piste 46, une butée basse de fin de course de la tige principale 13 peut être identifiée.

En outre, le système de suivi 40 peut comporter un contrôleur 60 relié aux trois senseurs 47, 48, 49 pour générer l'information de suivi en fonction de la position courante de la tige principale 13 relativement par rapport à la position refuge PREF.

En fonction de l'information de suivi, le contrôleur 60 peut commander l'actionneur secondaire 21 pour déplacer et maintenir la tige principale 13 dans la position refuge PREF.

Le contrôleur 60 peut utiliser la table de vérité en algèbre booléen stockée dans une mémoire. Par exemple, la position refuge PREF peut être définie par une combinaison de trois premières portions colorées 50 avec une première couleur identique correspondant à une zone médiane du fourreau 41.

Un premier sens de déplacement de la tige principale 13 peut être commandé lorsqu'une deuxième portion colorée 51 présentant une deuxième couleur est détectée sur la première piste 44 par le premier senseur 47.

Un second sens de déplacement de la tige principale 13 peut être commandé lorsqu'une deuxième portion colorée 51 présentant une deuxième couleur est détectée sur la deuxième piste 45 par le deuxième senseur 48.

Une butée haute de la tige principale 13 peut être identifiée lorsqu'à la fois une deuxième portion colorée 51 présentant une deuxième couleur est détectée sur la première piste 44 par le premier senseur 47 et une deuxième portion colorée 51 présentant une deuxième couleur est détectée sur la troisième piste 46 par le troisième senseur 49.

Enfin, une butée basse de la tige principale 13 peut être identifiée lorsqu'à la fois une deuxième portion colorée 51 présentant une deuxième couleur est détectée sur la deuxième piste 45 par le deuxième senseur 48 et une deuxième portion colorée 51 présentant une deuxième couleur est détectée sur la troisième piste 46 par le troisième senseur 49.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Dispositif d'actionnement linéaire (1) comportant un actionneur principal (11) muni d'un corps principal (12) et d'une tige principale (13) mobile selon au moins un degré de liberté en translation par rapport audit corps principal (12),
ledit dispositif d'actionnement linéaire (1) comportant un système de secours (20) configuré pour :
- dans un mode de fonctionnement nominal dudit dispositif d'actionnement linéaire (1), autoriser un déplacement de ladite tige principale (13) dudit actionneur principal (11) par rapport audit corps principal (12), et
- dans un mode de fonctionnement de secours dudit dispositif d'actionnement linéaire (1), ramener puis maintenir ladite tige principale (13) dudit actionneur principal (11) dans une position refuge (PREF) prédéterminée,
ledit système de secours (20) comportant un actionneur secondaire (21) muni d'un corps secondaire (22) et d'une tige secondaire (23) mobile selon un degré de liberté en translation par rapport audit corps secondaire (22), ladite tige secondaire (23) étant solidarisée avec ladite tige principale (13) uniquement dans ledit mode de fonctionnement de secours dudit dispositif d'actionnement linéaire (1),
**caractérisé en ce que** ledit système de secours (20) comporte un bloqueur hydraulique (26) solidarisé avec la tige secondaire (23), ledit bloqueur hydraulique (26) comportant une bague de serrage (27) déformable configurée pour :
- dans ledit mode de fonctionnement nominal, permettre un coulissement sans frottement de ladite tige principale (13) par rapport à ladite bague de serrage (27), et
- dans ledit mode de fonctionnement de secours, exercer un effort presseur sur ladite tige principale (13) et rendre solidaire en translation ladite tige principale (13) et ladite tige secondaire (23).

2. Dispositif selon la revendication 1,
**caractérisé en ce que** ledit système de secours (20) comporte des moyens de réglage (24) configurés pour régler axialement une position relative entre ledit corps secondaire (22) et ledit corps principal (12) ainsi que des moyens de solidarisation réversible (25) configurés pour solidariser ledit corps secondaire (22) avec ledit corps principal (12).

3. Dispositif selon l'une quelconque des revendications 1 à 2, **caractérisé en ce que** ledit bloqueur hydraulique (26) comporte :
- un carter (28),
- une pluralité de pistons (29) agencés dans ledit carter (28) radialement par rapport à un axe de translation principal (Ax1) de déplacement de ladite tige principale (13), lesdits pistons (29) coulissant respectivement dans des chambres (37) reliées hydrauliquement en parallèle à une alimentation hydraulique (30) comportant une pompe (31) configurée pour comprimer un fluide dans lesdites chambres (37), ledit fluide permettant d'exercer un effort de poussée sur chaque piston (29) pour placer chaque piston (29) dans une première position extrémale correspondant audit mode de fonctionnement nominal, et
- des moyens de rappel élastique (32) exerçant chacun un effort de rappel sur un piston (29) pour déplacer chaque piston (29) de ladite première position extrémale vers une seconde position extrémale correspondant audit mode de fonctionnement de secours.

4. Dispositif selon l'une quelconque des revendications 1 à 3, **caractérisé en ce que** ledit système de secours (20) comporte un système de suivi (40) configuré pour générer une information de suivi en fonction d'une position courante de ladite tige principale (13) par rapport audit corps principal (12) relativement par rapport à ladite position refuge (PREF).

5. Dispositif selon la revendication 4,
**caractérisé en ce que** ledit système de suivi (40) comporte un fourreau (41) mobile selon un degré de liberté en translation par rapport à un support (42) suivant un axe de translation de suivi (Ax3), ledit fourreau (41) étant solidaire de ladite tige principale (13) et configuré pour se déplacer en translation conjointement avec ladite tige principale (13), ledit axe de translation de suivi (Ax3) étant parallèle audit axe de translation principal (Ax1).

6. Dispositif selon la revendication 5,
**caractérisé en ce que** ledit fourreau (41) comporte une surface cylindrique externe (43) munie de trois pistes (44, 45, 46) orientées parallèlement selon ledit axe de translation de suivi (Ax3), lesdites trois pistes (44, 45, 46) étant respectivement décalées en azimut les unes par rapport aux autres autour dudit axe de translation de suivi (Ax3).

7. Dispositif selon la revendication 6,
**caractérisé en ce que** ledit système de suivi (40) comporte trois senseurs (47, 48, 49) solidaires dudit support (42), chaque piste (44, 45, 46) étant agencée en regard d'un senseur (47, 48, 49) et présentant au moins deux portions colorées (50, 51) présentant au moins deux couleurs différentes destinées à être identifiées par ledit senseur (47, 48, 49).

8. Dispositif selon la revendication 7,
**caractérisé en ce que**, ledit système de suivi (40) comporte un contrôleur (60) relié aux trois senseurs (47, 48, 49) pour générer ladite information de suivi en fonction de ladite position courante de ladite tige principale (13) relativement par rapport à ladite position refuge (PREF) et commander ledit actionneur secondaire (21) pour déplacer ladite tige principale (13) dans ladite position refuge (PREF).

9. Dispositif selon l'une quelconque des revendications 1 à 8, **caractérisé en ce que** ledit dispositif d'actionnement linéaire (1) comporte au moins un contrepoids d'équilibrage (61) décalé radialement par rapport à un axe de translation principal (Ax1) de déplacement de ladite tige principale (13).

10. Banc d'essai (2) de rotor (3) d'aéronef, ledit rotor (3) étant muni d'un moyeu (4) et de pales (5), ledit banc d'essai (2) comportant un moteur (6) permettant d'entraîner en rotation ledit rotor (3),
**caractérisé en ce que** ledit banc d'essai (2) comporte au moins un dispositif d'actionnement linéaire (1) selon l'une quelconque des revendications 1 à 9, et **en ce que**, lors d'un mouvement de rotation dudit rotor (3), ledit au moins un dispositif d'actionnement linéaire (1) est configuré pour, dans ledit mode de fonctionnement nominal, faire varier un pas des pales (5) dudit rotor (3) par rapport audit moyeu (4) et, dans ledit mode de fonctionnement de secours, pour maintenir ledit pas desdites pales (5) dudit rotor (3) vers une valeur prédéterminée.

## Patentansprüche

1. Linearbetätigungsvorrichtung (1) mit einem Hauptstellglied (11), der einen Hauptkörper (12) und eine Hauptstange (13) aufweist, die in mindestens einer Translationsfreiheitsrichtung relativ zu dem Hauptkörper (12) beweglich ist,
wobei die lineare Betätigungsvorrichtung (1) ein Notfallsystem (20) umfasst, das ausgelegt ist, um:
- in einem Nominalbetriebsmodus der Linearbetätigungsvorrichtung (1) eine Verschiebung der Hauptstange (13) des Hauptstellglieds (11) relativ zum Hauptkörper (12) zu ermöglichen, und
- in einem Notbetriebsmodus der Linearbetätigungsvorrichtung (1) die Hauptstange (13) des Hauptstellglieds (11) in eine vorgegebene Sicherheitsposition (PREF) zurückzubringen und dort zu halten,
wobei das Notfallsystem (20) ein Sekundärstellglied (21) umfasst, das mit einem Sekundärkörper (22) und einer Sekundärstange (23) ausgestattet ist, die relativ zu dem Sekundärkörper (22) in einer Translationsfreiheitsrichtung beweglich ist, wobei die Sekundärstange (23) ausschließlich im Notbetriebsmodus der Linearbetätigungsvorrichtung (1) fest mit der Hauptstange (13) verbunden ist,
**dadurch gekennzeichnet, dass** das Notfallsystem (20) eine mit der Sekundärstange (23) verbundene hydraulische Sperrvorrichtung (26) umfasst, wobei die hydraulische Sperrvorrichtung (26) einen verformbaren Klemmring (27) aufweist, der ausgelegt ist, um:
- im Nominalbetriebsmodus ein reibungsfreies Gleiten der Hauptstange (13) relativ zum Klemmring (27) zu ermöglichen, und
- im Notbetriebsmodus eine Anpresskraft auf die Hauptstange (13) auszuüben und die Hauptstange (13) und die Sekundärstange (23) verschiebungsfest miteinander zu verbinden.

2. Vorrichtung nach Anspruch 1,
**dadurch gekennzeichnet, dass** das Notfallsystem (20) Einstellmittel (24), die dazu ausgelegt sind, eine relative Position zwischen dem Sekundärkörper (22) und dem Hauptkörper (12) axial einzustellen, sowie reversible Verbindungsmittel (25) umfasst, die dazu ausgelegt sind, den Sekundärkörper (22) mit dem Hauptkörper (12) zu verbinden.

3. Vorrichtung nach einem der Ansprüche 1 bis 2,
**dadurch gekennzeichnet, dass** die hydraulische Sperrvorrichtung (26) umfasst:
- ein Gehäuse (28),
- eine Mehrzahl von Kolben (29), die in dem Gehäuse (28) radial zu einer Haupttranslationsachse (Ax1) der Hauptstange (13) angeordnet sind, wobei die Kolben (29) jeweils in Kammern (37) gleiten, die hydraulisch parallel mit einer Hydraulikversorgung (30) verbunden sind, die eine Pumpe (31) umfasst, die ausgelegt ist, um ein Fluid in die Kammern (37) zu drücken, wobei das Fluid es ermöglicht, eine Schubkraft auf jeden Kolben (29) auszuüben, um jeden Kolben (29) in eine dem Nominalbetriebsmodus entsprechende erste Endposition zu bringen, und
- elastische Rückstellmittel (32), die jeweils eine Rückstellkraft auf einen Kolben (29) ausüben, um jeden Kolben (29) aus der ersten Endposition in eine dem Notbetriebsmodus entsprechende zweite Endposition zu bewegen.

4. Vorrichtung nach einem der Ansprüche 1 bis 3,
**dadurch gekennzeichnet, dass** das Notfallsystem (20) ein Nachführsystem (40) umfasst, das ausgelegt ist, um Nachführinformation in Abhängigkeit von einer aktuellen Position der Hauptstange (13) relativ zum Hauptkörper (12) im Verhältnis zur Sicherheitsposition (PREF) zu erzeugen.

5. Vorrichtung nach Anspruch 4,
**dadurch gekennzeichnet, dass** das Nachführsystem (40) eine Hülse (41) umfasst, die in Bezug auf eine Halterung (42) in einem Translationsfreiheitsgrad entlang einer Nachführ-Translationsachse (Ax3) beweglich ist, wobei die Hülse (41) fest mit der Hauptstange (13) verbunden und ausgelegt ist, um sich gemeinsam mit der Hauptstange (13) translatorisch zu bewegen, wobei die Nachführ-Translationsachse (Ax3) parallel zur Haupttranslationsachse (Ax1) verläuft.

6. Vorrichtung nach Anspruch 5,
**dadurch gekennzeichnet, dass** die Hülse (41) eine zylindrische Außenfläche (43) aufweist, die mit drei parallel zur Nachführ-Translationsachse (Ax3) ausgerichteten Bahnen (44, 45, 46) versehen ist, wobei die drei Bahnen (44, 45, 46) jeweils azimutal zueinander um die Nachführ-Translationsachse (Ax3) versetzt sind.

7. Vorrichtung nach Anspruch 6,
**dadurch gekennzeichnet, dass** das Nachführsystem (40) drei mit der Halterung (42) fest verbundene Sensoren (47, 48, 49) aufweist, und dass jede Bahn (44, 45, 46) gegenüber einem Sensor (47, 48, 49) angeordnet ist und mindestens zwei farbige Abschnitte (50, 51) aufweist, die mindestens zwei verschiedene, zur Identifikation durch den Sensor (47, 48, 49) vorgesehene Farben aufweisen.

8. Vorrichtung nach Anspruch 7,
**dadurch gekennzeichnet, dass** das Nachführsystem (40) eine Steuereinheit (60) umfasst, die mit den drei Sensoren (47, 48, 49) verbunden ist, um die Nachführinformation in Abhängigkeit von der aktuellen Position der Hauptstange (13) relativ zur Sicherheitsposition (PREF) zu erzeugen und das Sekundärstellglied (21) so anzusteuern, dass die Hauptstange (13) in die Sicherheitsposition (PREF) bewegt wird.

9. Vorrichtung nach einem der Ansprüche 1 bis 8,
**dadurch gekennzeichnet, dass** die Linearbetätigungsvorrichtung (1) mindestens ein Ausgleichsgewicht (61) umfasst, das gegenüber einer Haupttranslationsachse (Ax1) der Hauptstange (13) radial versetzt ist.

10. Prüfstand (2) für einen Rotor (3) eines Luftfahrzeugs, wobei der Rotor (3) mit einer Nabe (4) und Blättern (5) versehen ist und der Prüfstand (2) einen Motor (6) umfasst, der es erlaubt, den Rotor (3) in Drehung zu versetzen,
**dadurch gekennzeichnet, dass** der Prüfstand (2) mindestens eine Linearbetätigungsvorrichtung (1) nach einem der Ansprüche 1 bis 9 umfasst, und dass die mindestens eine lineare Betätigungsvorrichtung (1) ausgelegt ist, bei einer Drehbewegung des Rotors (3) im Nominalbetriebsmodus eine Steigung der Blätter (5) des Rotors (3) relativ zur Nabe (4) zu variieren und im Notbetriebsmodus die Steigung der Blätter (5) des Rotors (3) auf einem vorgegebenen Wert zu halten.

## Claims

1. Linear actuator device (1) comprising a main actuator (11) provided with a main body (12) and a main rod (13) which is moveable around at least one degree of freedom in translation with respect to said main body (12),
said linear actuator device (1) comprising an emergency system (20) configured to:
- in a nominal operation mode of said linear actuator device (1), enable a movement of said main rod (13) of said main actuator (11) with respect to said main body (12), and
- in an emergency operation mode of said linear actuator device (1), return then maintain said main rod (13) of said main actuator (11) in a predetermined safe position (PREF),
said emergency system (20) comprising a secondary actuator (21) provided with a secondary body (22) and a secondary rod (23) which is moveable around a degree of freedom in translation with respect to said secondary body (22), said secondary rod (23) being secured with said main rod (13) only in said emergency operation mode of said linear actuator device (1),
**characterised in that** said emergency system (20) comprises a hydraulic blocker (26) secured with the secondary rod (23), said hydraulic blocker (26) comprising a deformable clamping ring (27), configured to:
- in said nominal operation mode, enable a frictionless sliding of said main rod (13) with respect to said clamping ring (27), and
- in said emergency operation mode, exert a presser force on said main rod (13), and secure said main rod (13) and said secondary rod (23) in translation.

2. Device according to claim 1,
**characterised in that** said emergency system (20) comprises adjustment means (24) configured to axially adjust a relative position between said secondary body (22) and said main body (12), as well as the reversible securing means (25) configured to secure said secondary body (22) with said main body (12).

3. Device according to any one of claims 1 to 2,
**characterised in that** said hydraulic blocker (26) comprises:
- a casing (28),
- a plurality of pistons (29) arranged in said casing (28) radially with respect to a main axis of translation (Ax1) for moving said main rod (13), said pistons (29) sliding respectively in chambers (37) hydraulically connected in parallel to a hydraulic supply (30) comprising a pump (31) configured to compress a fluid in said chambers (37), said fluid making it possible to exert a thrust force on each piston (29) to place each piston (29) in a first extreme position corresponding to said nominal operation mode, and
- elastic return means (32) each exerting a return force on a piston (29) to move each piston (29) of said first extreme position to a second extreme position corresponding to said emergency operation mode.

4. Device according to any one of claims 1 to 3,
**characterised in that** said emergency system (20) comprises a monitoring system (40) configured to generate monitoring information as a function of a current position of said main rod (13) with respect to said main body (12) relatively with respect to said safe position (PREF).

5. Device according to claim 4,
**characterised in that** said monitoring system (40) comprises a moveable sheath (41) around a degree of freedom in translation with respect to a support (42) along a monitoring axis of translation (Ax3), said sheath (41) being secured to said main rod (13) and configured to move in translation jointly with said main rod (13), said monitoring axis of translation (Ax3) being parallel to said main axis of translation (Ax1).

6. Device according to claim 5,
**characterised in that** said sheath (41) comprises an external cylindrical surface (43) provided with three tracks (44, 45, 46) oriented parallel along said monitoring axis of translation (Ax3), said three tracks (44, 45, 46) being respectively offset in azimuth against one another about said monitoring axis of translation (Ax3).

7. Device according to claim 6,
**characterised in that** said monitoring system (40) comprises three sensors (47, 48, 49) secured to said support (42), each track (44, 45, 46) being arranged facing a sensor (47, 48, 49) and having at least two coloured portions (50, 51) having at least two different colours, intended to be identified by said sensor (47, 48, 49).

8. Device according to claim 7,
**characterised in that**, said monitoring system (40) comprises a controller (60) connected to the three sensors (47, 48, 49) to generate said monitoring information as a function of said current position of said main rod (13) relatively with respect to said safe position (PREF) and to control said secondary actuator (21) to move said main rod (13) in said safe position (PREF).

9. Device according to any one of claims 1 to 8,
**characterised in that** said linear actuator device (1) comprises at least one balancing counterweight (61) offset radially with respect to a main axis of translation (Ax1) for moving said main rod (13).

10. Aircraft rotor (3) test bench (2), said rotor (3) being provided with a hub (4) and with vanes (5), said test bench (2) comprising a motor (6) making it possible to rotate said rotor (3),
**characterised in that** said test bench (2) comprises at least one linear actuator device (1) according to any one of claims 1 to 9, and **in that**, during a rotation movement of said rotor (3), said at least one linear actuator device (1) is configured to, in said nominal operation mode, make a pitch of the vanes (5) of said rotor (3) vary with respect to said hub (4) and, in said emergency operation mode, to maintain said pitch of said vanes (5) of said rotor (3) to a predetermined value.
